# EUROPEAN PATENT SPECIFICATION

(11) **EP 1 593 770 B1**
(45) Date of publication and mention of the grant of the patent: **16.03.2011**
(21) Application number: 04015428.8
(22) Date of filing: 30.06.2004
(51) Int. Cl.: D06F 58/02, D06F 58/20

(54) **Clothes dryer**
Wäschetrockner
Sèche-linge

(30) Priority: 06.05.2004 JP 2004137074
(43) Date of publication of application: 09.11.2005
(73) Proprietor: Panasonic Corporation, Kadoma-shi Osaka 571-8501 (JP)
(72) Inventor: Yabuuchi, Hidetaka, Takarazuka-shi, Hyogo 665-0033 (JP); Nakamoto, Shigeharu, Kawanishi-shi, Hyogo 666-0152 (JP); Tahara, Mikio, Osaka-shi, Osaka 531-0064 (JP)
(74) Representative: Eisenführ, Speiser & Partner

(56) References cited:
- EP-A- 0 467 188
- CH-A- 690 038
- DE-A1- 3 407 439
- DE-A1- 4 409 607
- DE-A1- 19 731 826

## Description

The present invention relates to a clothes dryer according to the preamble of claim 1. The clothes dryer will be used for drying clothes and a clothes dryer having a washing function. Such clothes dryer is known from CH 690 038 A5.

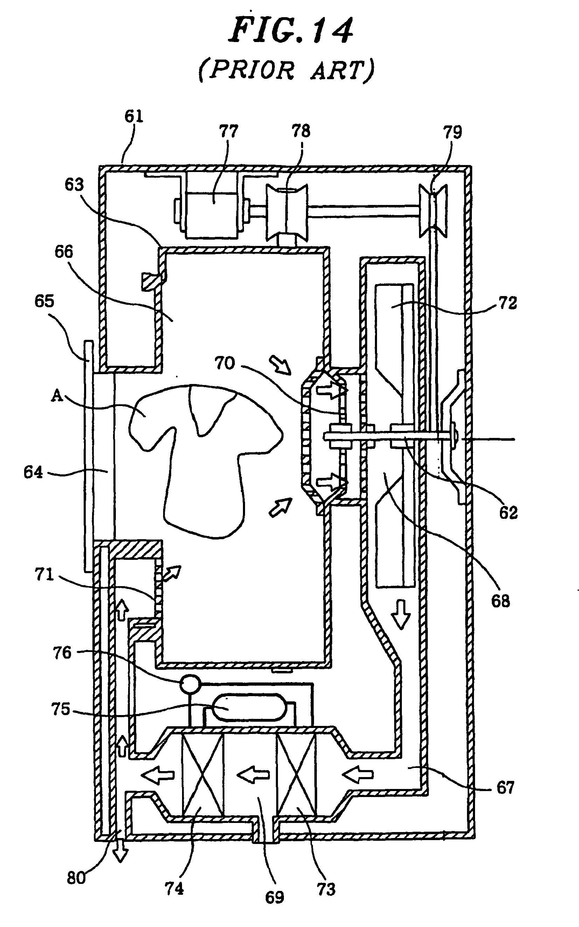

A conventional drum-type clothes dryer is constructed as shown in Fig. 14. The construction of the convention drum-type clothes dryer will be described below. As shown in Fig. 14, rotary drum 63 is installed in outer casing 61 to be rotated about horizontal shaft 62. Opening 64 is formed in the front side of rotary drum 63 to face the front side of outer casing 61, and is selectively opened and closed by door 65. Air circulation path 67, including drying chamber 66 defined in rotary drum 63, is defined in outer casing 61. Air circulation path 67 includes drying chamber 66, air blowing chamber 68 and heat exchanging chamber 69. Air circulation path 67 circulates air in such a way that the air in drying chamber 66 flows into air blowing chamber 68 through air exhaust holes 70 formed in the back side of drying chamber 66, passes through heat exchanging chamber 69, and returns to drying chamber 66 through air supply holes 71 formed in the front side of drying chamber 66.

Fan 72 is located in air blowing chamber 68. Heat absorber 73 and heat radiator 74 are located upstream and downstream of heat exchanging chamber 69, respectively. Heat absorber 73 and heat radiator 74, together with compressor 75 and expansion device 76 such as a capillary tube, constitute a heat pump mechanism. In this construction, highly humid air flowing out of drying chamber 66 is cooled and dehumidified by heat absorber 73 to be dry air which in turn reaches heat radiator 74 and is heated thereby to be hot air. The hot air is supplied to drying chamber 66 through air supply holes 71, and is used to dry clothes A. Reference numeral 77 designates a motor. The rotating force of motor 77 is transmitted to rotary drum 63 and fan 72 via respective belts 78 and 79.

In the meantime, while the air in air circulation path 67 is circulated without communicating with atmosphere, the thermal energy of the air is increased and, simultaneously, the thermal energy of the coolant undergoing a heat pump cycle is increased so that the temperature and pressure of the coolant are increased. Accordingly, compressor 75 is rapidly overloaded so that the heat pump mechanism cannot be stabilized in a safe state. For this reason, there has been proposed in, e.g., Japanese Patent Laid-open Publication No. 7-178289 a circulation type scheme of forming air discharge port 80 in air circulation path 67 extending from heat radiator 74 to drying chamber 66 so that a part of the air heated by heat radiator 74 is discharged from air circulation path 67 through air discharge port 80.

However, this scheme is problematic in that a part of the drying air heated by heat radiator 74 is discharged to outside of the clothes dryer before it is introduced into drying chamber 66 so that thermal energy necessary for drying clothes is uselessly discharged, thereby deteriorating a dry efficiency of clothes.

It is an object of the present invention to provide a clothes dryer, which is capable of stabilizing the heat pump mechanism thereof, and achieving a reduction of drying time and a saving of energy.

This object will be achieved with a known clothes dryer comprising the features of the second part of claim 1.

The above and other objects and features of the present invention will become apparent from the following description of preferred embodiments given in conjunction with the accompanying drawings, in which:
Fig. 1 is a sectional view of a clothes dryer having a washing function in accordance of a first embodiment of the present invention;
Fig. 2 represents a rear view of the clothes dryer in Fig. 1;
Fig. 3 sets forth a sectional view taken along line B-B of Fig. 2;
Fig. 4 depicts a schematic system diagram showing the construction of a heat pump mechanism and the flow of drying air in accordance with the present embodiment;
Fig. 5 shows a sectional view of a clothes dryer having a washing function in accordance with a second embodiment ;
Fig. 6 provides a rear view of the clothes dryer in Fig. 5;
Fig. 7 represents a schematic system diagram showing the construction of a heat pump mechanism and the flow of drying air in accordance with the second embodiment;
Fig. 8 describes graphs showing the outputs of a state detection unit and the control states of a regulating valve in the clothes dryer having a washing function in accordance with the second embodiment;
Fig. 9 depicts graphs showing the outputs of the state detection unit and the control states of the regulating valve and a compression capacity varying unit in the clothes dryer having a washing function in accordance with the second embodiment;
Fig. 10 sets forth a schematic system diagram showing the construction of a heat pump mechanism and the flow of drying air in accordance with a third embodiments ;
Fig. 11 is a schematic system diagram showing the construction of a heat pump mechanism and the flow of drying air in accordance with a fourth embodiment ;
Fig. 12 presents a graph illustrating variations in temperatures of coolant and air when coolant is used at temperature below critical temperature;
Fig. 13 shows a graph illustrating variations in temperatures of coolant and air when carbon dioxide is used as coolant in a supercritical state; and
Fig. 14 is a sectional view of a conventional clothes dryer.

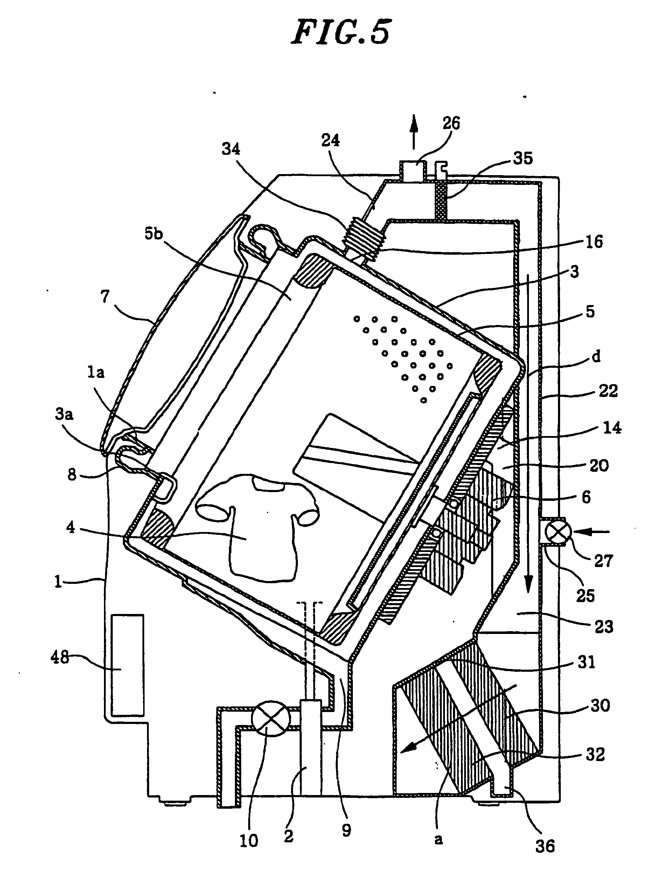

Fig. 5 to fig. 13 show embodiments which do not form part of the invention as defined in the claims, i.e. the second to the fourth embodiment.

### [First embodiment]

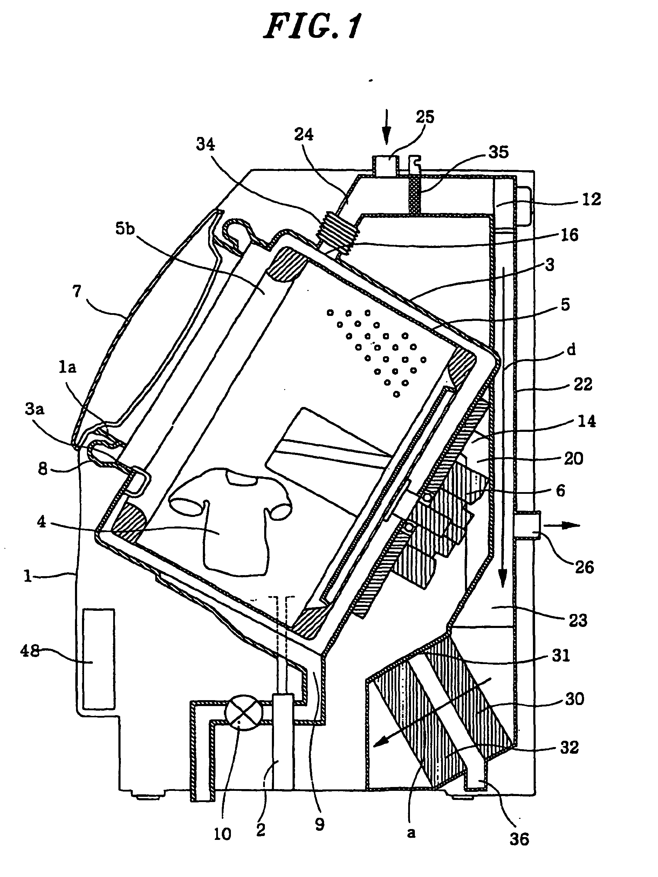

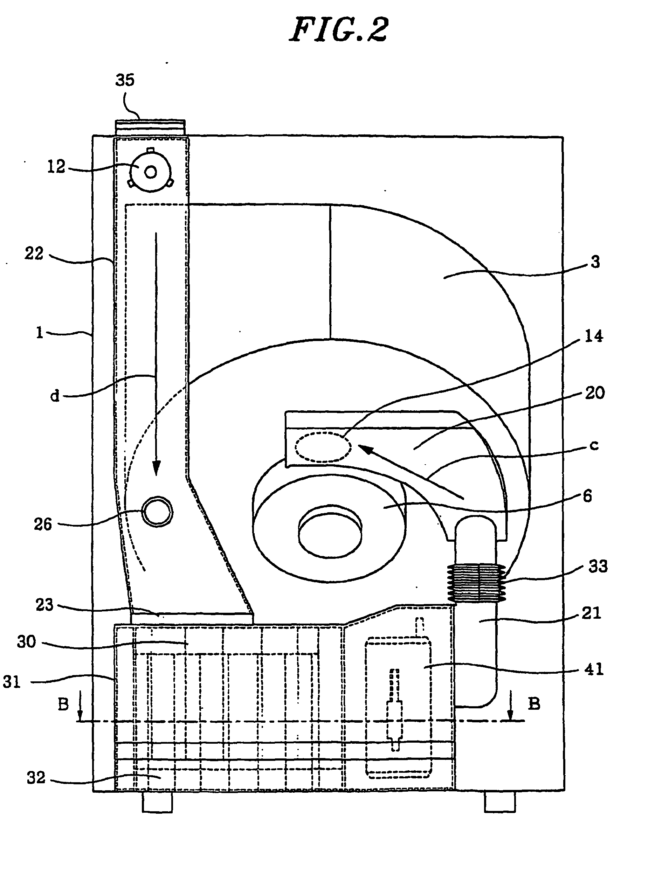

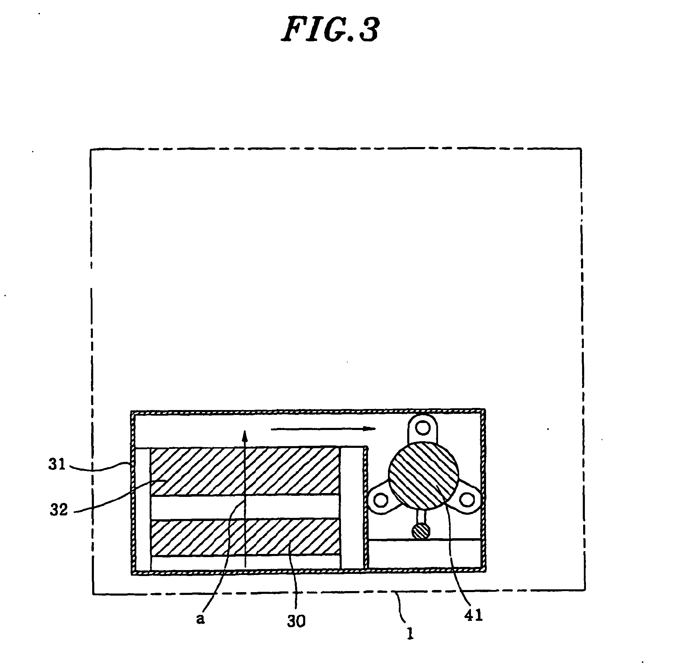

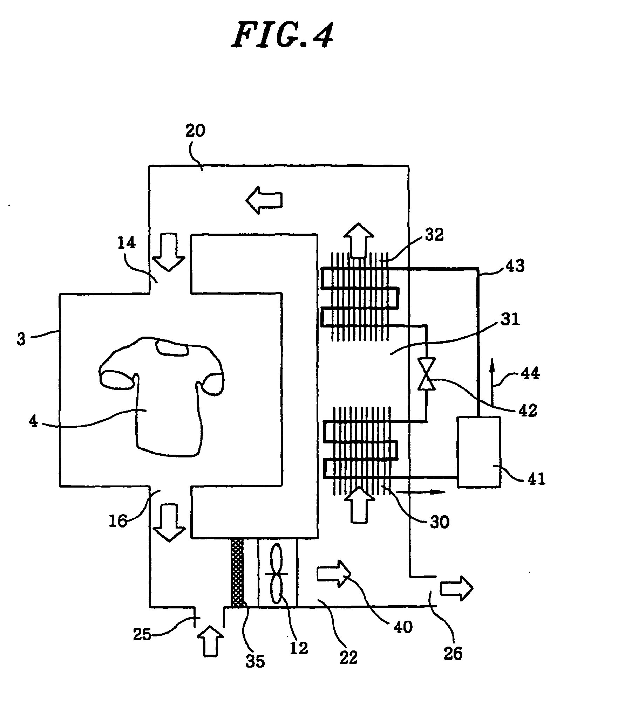

Fig. 1 is a sectional view of a clothes dryer having a washing function in accordance of a first embodiment of the present invention. Fig. 2 is a rear view of the clothes dryer of Fig. 1. Fig. 3 is a sectional view taken along line B-B of Fig. 2. Fig. 4 is a schematic system diagram showing the construction of a heat pump mechanism and the flow of drying air in accordance with the first embodiment.

Outer tub 3 is elastically supported by a plurality of suspensions 2 in housing 1. The vibrations generated at the time of washing and dewatering are absorbed by suspensions 2. Cylindrical inner tub 5 accommodating therein clothes 4 is rotatably installed inside outer tub 3, and is rotated by drive motor 6. Outer tub 3 serves as a washing chamber for clothes 4 during a washing process, and as a drying chamber for clothes 4 during a drying process.

Opening 1a is formed in the front side of housing 1 for loading/unloading clothes 4 into/from inner tub 5. Door 7 is installed in front of opening 1a to selectively open and close opening 1a. Outer tub 3 and inner tub 5 are also provided with openings 3a and 5b in the front sides thereof, respectively. Opening 3a of outer tub 3 is connected with opening 1a of housing 1 by bellows 8 in a watertight manner. Drain hole 9 is formed in the bottom portion of outer tub 3 to discharge washing water. Drain hole 9 is connected to drain valve 10 that selectively opens and closes a drain path. During a washing process, drain valve 10 is closed so that a specific amount of washing water can be collected in outer tub 3. Blower 12 is placed in an upper portion of housing 1, as shown in Fig. 1.

Blower 12 draws air having passed through inner and outer tubs 5 and 3 via air exhaust hole 16 formed in the upper portion of outer tub 3, and blows the air into air exhaust duct 22 installed behind outer tub 3. The air flows from air exhaust duct inlet 24 to air exhaust duct outlet 23, as indicated by arrow d. Furthermore, as shown in Fig. 2, air supply duct 20 is mounted on the outside of outer tub 3. Drying air is introduced through air supply duct inlet 21 into air supply duct 20 and flows in the direction of arrow c to be supplied into outer tub 3 and inner tub 5 through air supply hole 14.

Heat absorber 30 and heat radiator 32 composed of heat exchangers constituting parts of a heat pump mechanism are arranged below outer tub 3, and are accommodated in housing 1 in a space-effective manner. Heat exchange air path 31 serves to allow the air blown by blower 12 to flow from heat absorber 30 to heat radiator 32 in the direction of arrow a. As shown in Figs. 2 and 3, compressor 41, heat absorber 30 and heat radiator 32 are accommodated in heat exchange air path 31, with compressor 41, and heat absorber 30 and heat radiator 32 being arranged on the left and right portions of housing 1. The inlet of heat exchange air path 31 communicates with air exhaust duct outlet 23, while the outlet of heat exchange air path 31 communicates with air supply duct inlet 21.

As indicated by the arrows 40 of the Fig. 4, the drying air blown by blower 12 is circulated as follows. The drying air sequentially passes through air exhaust duct 22, and heat absorber 30 and heat radiator 32 located in heat exchange air path 31. The drying air then flows through air supply duct 20 into outer and inner tubs 3 and 5 via air supply hole 14. The drying air passes through clothes 4 accommodated in inner tub 5, and returns to blower 12 through air exhaust hole 16. That is, outer tub 3, air exhaust duct 22, heat exchange air path 31 and air supply duct 20 form an air circulation path.

There is provided air discharge port 26 for discharging a part of air, which flows through the air circulation path extending from outer tub 3 to heat absorber 30. Preferably, air discharge port 26 is formed at a position in air exhaust duct 22. Air introducing port 25 is formed at a position in the air circulation path extending from outer tub 3 to heat radiator 32 to introduce outside air into the air circulation path. Air introducing port 25 is located between outer tub 3 and heat radiator 32, at a position in air exhaust duct 22 extending from outer tub 3 to heat absorber 30 between outer tub 3 and air discharge port 26.

Blower 12 is designed to be located between air introducing port 25 and air discharge port 26. As a filtering unit for removing impurities from air, filter 35 formed of, e.g., a synthetic fibrous net is detachably installed at a position in air exhaust duct 22. Filter 35 is located between outer tub 3 and heat absorber 30. Further, filter 35 is located between outer tub 3 and air discharge port 26 between air introducing port 25 and air discharge port 26, preferably between air introducing port 25 and blower 12.

Air supply duct 20 communicates with air supply duct inlet 21 through air supply hose 33 made of a bellows-shaped, stretchable and flexible material, and air exhaust hole 16 communicates with air exhaust duct inlet 24 through air exhaust hose 34 made of a bellows-shaped, stretchable and flexible material, thereby preventing the vibrations of outer tub 3 from being transmitted to the heat pump mechanism. Drain water container 36 is placed under heat exchange air path 31 to collect condensed water from heat absorber 30. The water collected in drain water container 36 is discharged to outside of the clothes dryer through a drain hole (not shown).

The heat pump mechanism is formed by connecting compressor 41, heat radiator 32 for radiating the heat of compressed coolant, throttle unit 42 made of a throttle valve, a capillary tube or the like for reducing the pressure of highly pressurized coolant, and heat absorber 30 for absorbing heat using low-pressure coolant through pipeline 43. The coolant realizes a heat pump cycle while circulating in the direction of arrow 44 as shown in Fig. 4. Control unit 48 controls a washing, a rinsing, a dewatering and a drying process by operating drive motor 6, drain valve 10, blower 12 and compressor 41.

Hereinafter, operation of the above-described construction will be described. In the washing process, water is supplied into outer tub 3 with drain valve 10 closed until the water reaches a predetermined water level in outer tub 3, and the washing of clothes 4 is then performed by actuating drive motor 6 to rotate inner tub 5 accommodating clothes 4 and the washing water. In the rinsing process after the washing process, the used water is drained out by opening drain valve 10 and new water is supplied into outer tub 3 and the rinsing of clothes 4 is performed by rotating inner tub 5 in the same way as the washing process. In the dewatering process, the dewatering of clothes 4 is performed by actuating drive motor 6 to rotate inner tub 5 accommodating clothes 4 at a higher speed.

In the drying process, compressor 41 of the heat pump mechanism is operated so that the coolant is compressed to be circulated through heat radiator 32, throttle unit 42 and heat absorber 30 under pressure. Heat radiator 32 radiates heat to surroundings due to the compression of coolant, and heat absorber 30 absorbs heat from the surroundings by coolant whose pressure has been reduced by throttle unit 42. At this time, blower 12 is operated so that hot air heated by the radiation of heat radiator 32 is passed through air supply duct 20 and blown into outer and inner tubs 3 and 5 through air supply hole 14. Inner tub 5 is rotated by drive motor 6, so that clothes 4 are agitated upward and downward.

The hot air blown into inner tub 5 takes moisture away from clothes 4 while passing through the gaps of clothes 4, and the moist hot air then flows through air exhaust duct 22 via air exhaust hole 16 of outer tub 3 to reach heat exchange air path 31. The moist hot air is dehumidified by being deprived of sensible heat and latent heat while passing through heat absorber 30, thus being separated into dry air and condensed water. This dry air is heated by heat radiator 32 to be hot. The water condensed by heat absorber 30 is collected in drain water container36, and discharged through the drain hole therefrom. The drying of clothes 4 is performed by repeating the above-described process.

As blower 12 is operated, air introducing port 25 existing on the suction side of blower 12 is maintained under negative pressure with respect to the atmosphere, while air discharge port 26 existing on the discharge side of blower 12 is maintained under positive pressure with respect to the atmosphere. On this account, outside air is introduced through air introducing port 25 into the air circulation path, while a part of the air in the air circulation path is discharged through air discharge port 26 to the outside of the clothes dryer. With this operation, thermal energy dissipation as well as air discharge are performed through air discharge port 26, so that thermal energy can be prevented from being accumulated in the coolant within the heat pump cycle, thus stabilizing the heat pump mechanism in a safe state without an application of overload to compressor 41.

At this time, air discharged from air discharge port 26 is one that has contributed to the drying of clothes 4 while passing through outer and inner tubs 3 and 5, so that clothes 4 can be efficiently dried without an unnecessary loss of thermal energy. Further, the air discharged from air discharge port 26 is a low-temperature and high-moisture air formed by the air having passed through inner and outer tubs 5 and 3 being mixed with the air drawn from air introducing port 25, so that an increase in temperature around the clothes dryer can be suppressed.

Lint stemming from clothes 4, which is contained in the air having passed through outer and inner tubs 3 and 5, is filtered by filter 35. Accordingly, the lint is prevented from reaching blower 12, heat absorber 30 and heat radiator 32, and flying from air discharge port 26 to the outside of the clothes dryer. Additionally, filter 35 filters off dust contained in the outside air drawn from air introducing port 25, and thus prevents dust from reaching blower 12, heat absorber 30 and heat radiator 32.

By using the heat pump mechanism as described above, heat absorbed by heat absorber 30 is collected by the coolant and then radiated by heat radiator 32 so that quantity of heat higher than energy input by compressor 41 can be applied to clothes 4, thereby resulting in a reduction of drying time and a saving of energy.

As described above, the air circulation path for circulating drying air is provided to guide the drying air from outer tub 3 through heat absorber 30 and heat radiator 32 back to outer tub 3 and air discharge port 26 is provided in the air circulation path between outer tub 3 and heat absorber 30, so that a part of the drying air flowing from outer tub 3 to heat absorber 30 is discharged to outside of the clothes dryer. Accordingly, the air having passed through clothes 4 is discharged to the outside of the clothes dryer so that clothes 4 can be efficiently dried without an unnecessary loss of thermal energy required to dry clothes 4.

Furthermore, air introducing port 25 for introducing outside air into the air circulation path is placed between outer tub 3 and heat radiator 32, and the drying air flowing from outer tub 3 toward heat radiator 32 through the air circulation path is mixed with the outside air. Accordingly, the outside air drawn into the air circulation path can be heated while passing through the heat radiator, thereby preventing a decrease in temperature of the drying air supplied to the drying chamber.

Furthermore, filter 35 is placed between outer tub 3 and heat absorber 30 so that lint stemming from clothes 4 can be prevented from reaching heat absorber 30 and heat radiator 32 during a drying process. Accordingly, it is possible to prevent heat exchange efficiency from decreasing due to the attachment of the lint to heat absorber 30 and heat radiator 32.

Although, in the present embodiment, there has been described the case where the heat pump mechanism is mounted on the clothes dryer having a washing function wherein the washing, the rinsing, the dewatering and the drying process are automatically performed on clothes in a single tub, the present invention is not limited thereto. Even when the present invention is applied to a clothes dryer that performs only a drying process, the same effects can be achieved.

Furthermore, although the drain hole is used as a means for discharging the condensed water from drain water container 36, the condensed water may be discharged using a water exhaust pump.

### [Second embodiment]

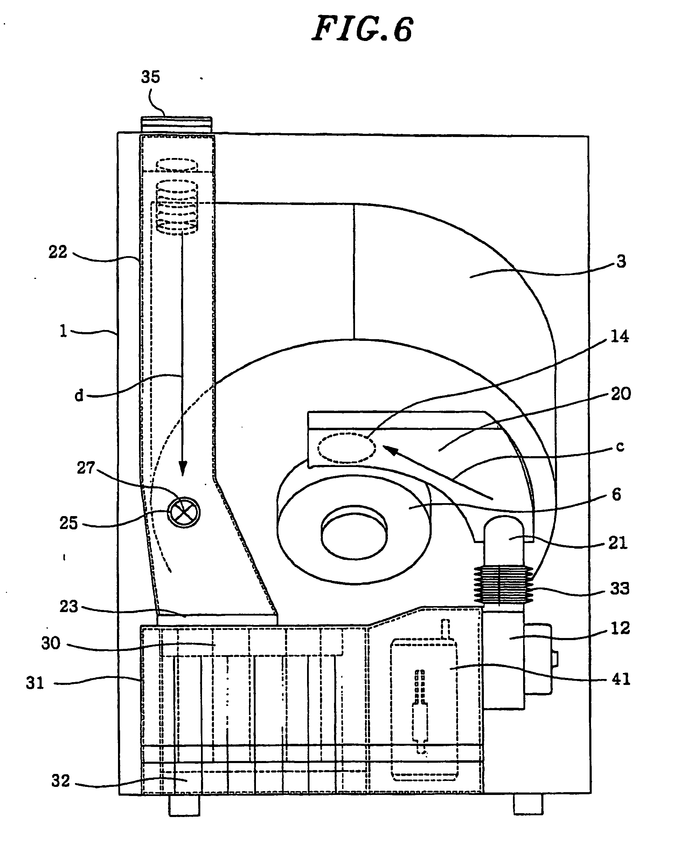

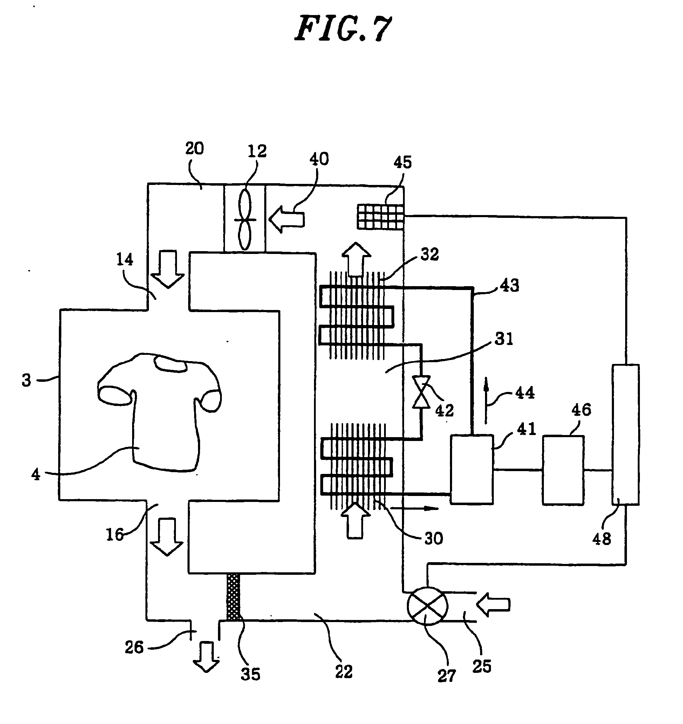

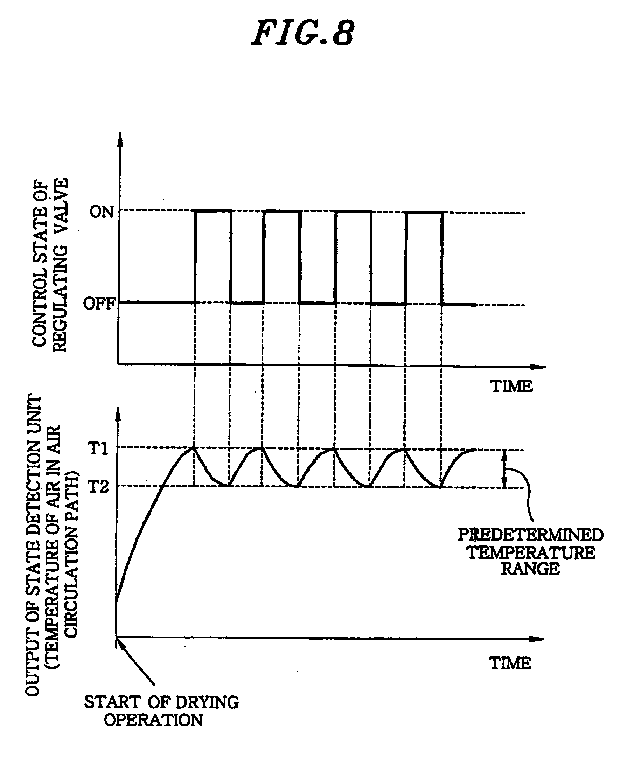

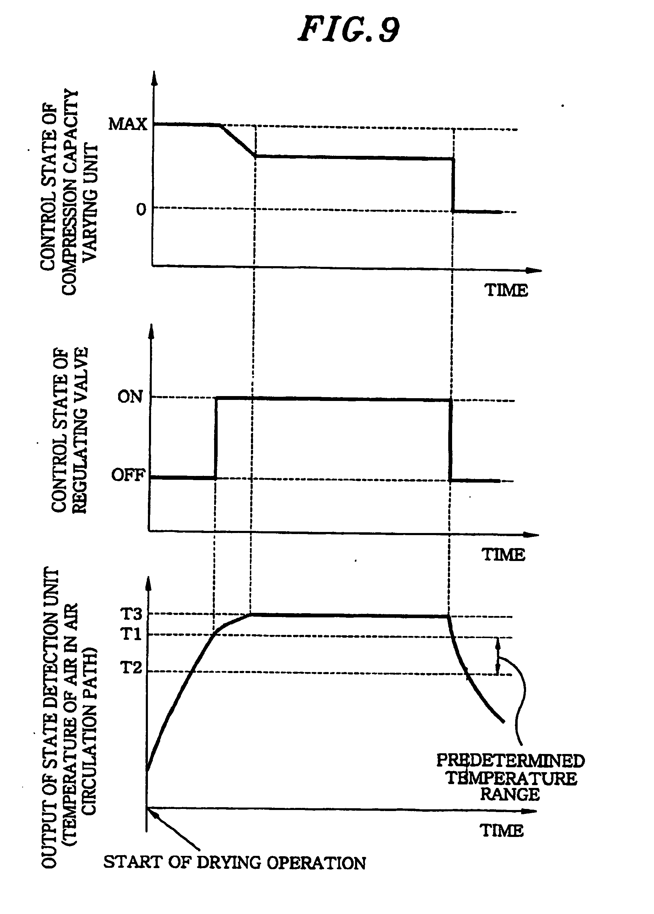

Fig. 5 is a sectional view of a clothes dryer having a washing function in accordance with a second embodiment. Fig. 6 is a rear view of the clothes dryer shown in Fig. 5. Fig. 7 is a schematic system diagram showing the construction of a heat pump mechanism and the flow of drying air in accordance with the second embodiment. Fig. 8 represents graphs showing the outputs of a state detection unit and the control states of a regulating valve in the clothes dryer having a washing function in accordance with the second embodiment. Fig. 9 depicts graphs showing the outputs of the state detection unit and the control states of the regulating valve and a compression capacity varying unit in the clothes dryer having a washing function in accordance with the second embodiment. The elements identical with those of the first embodiment are designated by the same reference numerals, and detailed descriptions thereof are omitted.

As shown in Fig. 6, blower 12 is mounted on a side surface of heat exchange air path 31 in a lower portion of housing 1. A suction port of blower 12 communicates with heat exchange air path 31. The air flowing through heat exchange air path 31 passes through heat absorber 30 and heat radiator 32, and then reaches the suction port of blower 12. A discharge port of blower 12 communicates with air supply duct inlet 21 via air supply hose 33 made of a bellows-shaped, stretchable and flexible material. Blower 12 blows hot air into air supply duct 20 as indicated by arrow c to supply the hot air through air supply hole 14 to outer and inner tubs 3 and 5, thereby drying clothes 4 in inner tub 5.

Air introducing port 25 for introducing outside air into an air circulation path and air discharge port 26 for discharging air out of the air circulation path are formed in air exhaust duct 22 extending from outer tub 3 to heat absorber 30. Air discharge port 26 is located between outer tub 3 and air introducing port 25. Regulating valve 27 is installed in air introducing port 25 to adjust an amount of air introduced. When electric power is applied to regulating valve 27, it is opened so that outside air is drawn therethrough into the air circulation path. On the other hand, while no electric power is applied to regulating valve 27, it is closed so that no outside air is introduced into the air circulation path.

As shown in Fig. 7, state detection unit 45 is placed downstream of heat radiator 32 in the air circulation path. State detection unit 45 can detect the state of a heat pump mechanism by detecting the temperature of air heated by heat radiator 32, and thus estimating the temperature of coolant flowing through pipeline 43.

Reference numeral 46 designates a compression capacity varying unit for varying the compression capacity of compressor 41, which includes an inverter circuit for controlling a drive voltage of compressor 41 and the like. Control unit 48 controls regulating valve 27 and the compression capacity varying unit 46 in response to the output of state detection unit 45.

Hereinafter, operation of the above-described construction will be described. In a drying process, control unit 48 operates compressor 41, and simultaneously drives blower 12. In an early stage of the drying process, control unit 48 cuts off the supply of power to regulating valve 27, so that outside air is not introduced through air introducing port 25 into the air circulation path. Since no air is introduced into the air circulation path, the discharging of air from air discharge port 26 is also stopped and the radiation of heat to outside of the air circulation path is performed by only the natural radiation of heat from the wall of the air circulation path. For this reason, thermal energy is rapidly accumulated in the air within the air circulation path, thereby resulting in a rapid increase in temperature of air supplied to outer tub 3.

Furthermore, control unit 48 operates compression capacity varying unit 46 to maximize compression capability of compressor 41 in the early stage of the drying process, so that the temperature of coolant in pipeline 43 of heat radiator 32 is rapidly increased, and the temperature of air having undergone heat exchange with the coolant and being supplied to outer tub 3 is more rapidly increased. On this account, in the early stage of the drying process, drying capability can be improved, so that drying time can be shortened.

When a predetermined time has elapsed after the initiation of the drying process, sufficient thermal energy is accumulated in the air in the air circulation path, so that the temperature and pressure of the coolant are increased, thereby increasing load applied to compressor 41. As shown in Fig. 8, when the temperature of air in the air circulation path, which is detected by state detection unit 45, reaches T1, control unit 48 turns on regulating valve 27 to allow outside air to be introduced into the air circulation path through air introducing port 25. At the same time, the substantially same amount of air as that of air introduced is discharged through air discharge port 26, so that heat is radiated from air discharge port 26 to the outside of the air circulation path.

With the above-described operation, the application of overload to compressor 41 attributable to an excessive increase of the temperature and pressure of the coolant can be prevented, so that the heat pump mechanism can be stabilized in a safe state. In this case, air discharged from air discharge port 26 is one that has contributed to the drying of clothes 4 while passing through outer and inner tubs 3 and 5, so that clothes 4 can be efficiently dried without an unnecessary loss of thermal energy. Furthermore, the air discharged from air discharge port 26 is a hot air before being mixed with outside air introduced in the air circulation path, so that the amount of radiation to the outside of the air circulation path can be sufficiently guaranteed.

As shown in Fig. 8, when due to the sufficient radiation of heat through air discharge port 26, the temperature of air in the air circulation path, which is detected by state detection unit 45, is gradually decreased to T2, control unit 48 turns off regulating valve 27 to accumulate thermal energy in the air in the air circulation path. In this way, a decrease in capability of drying clothes 4 attributable to an excessive decrease in temperature of air supplied to outer tub 3 is prevented.

Thereafter, control unit 48 repeats the turning on and off of regulating valve 27 to allow the temperature detected by state detection unit 45 to fall within a range from T1 to T2. When the temperature around the clothes dryer is low and the amount of natural heat radiation from the air circulation path is large, the time period for which regulating valve 27 is not actuated is lengthened, and thus the amount of heat radiation through air discharge port 26 is decreased. On the other hand, when the temperature around the clothes dryer is high and the amount of natural heat radiation from the air circulation path is small, the time period for which regulating valve 27 is actuated is lengthened, and thus the amount of heat radiation through air discharge port 26 is increased. With such control, the heat pump mechanism can be maintained in an appropriate state by keeping the total amount of heat radiation from the air circulation path proper, so that the reduction of drying time and the saving of energy can be achieved.

When the temperature around the clothes dryer is considerably high, the temperature of outside air introduced from air introducing port 25 is considerably high and the amount of heat radiation from the wall of the air circulation path is small. In this case, even though heat radiation out of the air circulation path is performed by actuating regulating valve 27, there may be a possibility that the temperature detected by state detection unit 45 is increased to a temperature higher than T1. In such a case, when the temperature detected by state detection unit 45 reaches T3, control unit 48 decreases the compression capacity of compressor 41 using compression capacity varying unit 46. With this operation, an increase in temperature of the coolant in pipeline 43 of heat radiator 32 is stopped, and an increase in temperature of the air, which has undergone heat exchange with the coolant and is supplied to outer tub 3, is stopped. Thereafter, control unit 48 controls compression capacity varying unit 46 so that the temperature detected by state detection unit 45 reaches T3. With this control, the heat pump mechanism can be maintained in an appropriate state.

As described above, the air circulation path is provided to circulate air in the order of outer tub 3, heat absorber 30 and heat radiator 32, the air introducing port 25 is formed in the air circulation path extending from outer tub 3 to heat absorber 30 to introduce outside air into the air circulation path, and air discharge port 26 is provided between outer tub 3 and air introducing port 25 to discharge air out of the air circulation path. Accordingly, the air having passed through outer tub 3 can be discharged to the outside of the clothes dryer so that clothes 4 can be efficiently dried without an unnecessary loss of thermal energy required to dry clothes 4. Furthermore, since the hot air is discharged from the air circulation path before being mixed with the outside air introduced therein, the sufficient amount of heat radiation from the air circulation path can be carried out so that the heat pump mechanism can be stabilized in a safe state by suppressing the overload of compressor 41 attributable to an excessive increase in temperature and pressure of the coolant.

Furthermore, since regulating valve 27 for controlling the amount of air introduced and discharged is installed in air introducing port 25, the amount of heat radiation from air discharge port 26 can be decreased by reducing the amount of air introduced and discharged when the temperature around the clothes dryer is low and the amount of natural heat radiation from the air circulation path is large. On the other hand, the amount of heat radiation from air discharge port 26 can be increased by increasing the amount of air introduced and discharged when the temperature around the clothes dryer is high and the amount of natural heat radiation from the air circulation path is small. As described above, by appropriately controlling the amount of heat radiation from the air circulation path, the heat pump mechanism can be maintained in an appropriate state, thereby resulting in the reduction of drying time and the saving of energy.

Furthermore, since regulating valve 27 is controlled to reduce the amount of air introduced and discharged in the early stage of the drying process, the amount of heat radiation from the air discharge port 26 can be minimized at the early stage. Accordingly, the temperature of the air supplied into outer tub 3 can be rapidly increased, thus shortening the drying time.

In addition, since state detection unit 45 for detecting the state of the heat pump mechanism is provided and regulating valve 27 is controlled in response to the output of state detection unit 45, the heat pump mechanism can be maintained in an appropriate state by controlling the amount of heat radiation from air discharge port 26 while monitoring the state of the heat pump mechanism, thus achieving the reduction of drying time and the saving of energy.

Furthermore, since compression capacity varying unit 46 for varying compression capacity of compressor 41 is provided and regulating valve 27 and compression capacity varying unit 46 are controlled in response to the output of state detection unit 45, the amount of heat radiation from air discharge port 26 and the compression capacity can be controlled while monitoring the state of the heat pump mechanism, thereby making it possible to maintain the heat pump mechanism in an appropriate state.

Furthermore, since compression capacity varying unit 46 is controlled to increase the compression capacity of compressor 41 in the early stage of the drying process, the temperature of air supplied to outer tub 3 can be rapidly increased, thus shortening drying time.

Moreover, since state detection unit 45 detects the temperature of the air in the air circulation path, the heat pump mechanism can be controlled to be maintained in an appropriate state while monitoring the state of the heat pump mechanism.

In this embodiment, there has been described that air introducing port 25 is located upstream of heat absorber 30, however, the present invention is not limited thereto. In case air introducing port 25 is located between heat absorber 30 and heat radiator 32, the same effects can also be achieved. Additionally, although regulating valve 27 has been described as being located in air introducing port 25, the present invention is not limited thereto. In case regulating valve 27 is located in air discharge port 26, the same effects can also be achieved. Consequently, regulating valve 27 may be located in at least one of air introducing port 25 and air discharge port 26.

### [Third embodiment]

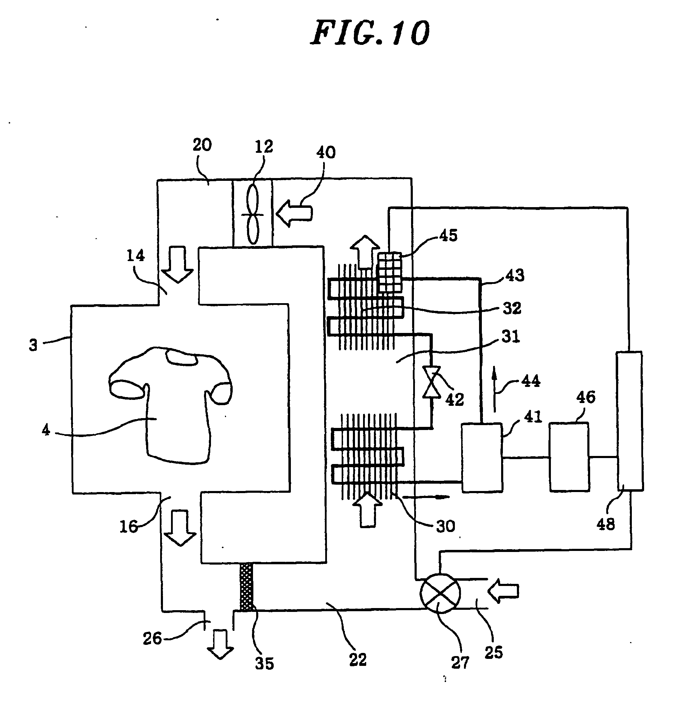

Fig. 10 is a schematic system diagram showing the construction of a heat pump mechanism and the flow of drying air in accordance with a third embodiment. The elements identical with those of the first and the second embodiments are designated by the same reference numerals, and detailed descriptions thereof are omitted.

The embodiment of Fig. 10 is characterized in that state detection unit 45 detects the temperature of coolant. In this embodiment, state detection unit 45 is installed in pipeline 43 passing through heat radiator 32 to detect a temperature of coolant flowing in and along pipeline 43. Control unit 48 controls regulating valve 27 and compression capacity varying unit 46 so that the temperature of the coolant detected by state detection unit 45 falls within a predetermined temperature range. In this way, it is possible to control the amount of heat radiation from air discharge port 26 and compression capacity while monitoring the state of a heat pump mechanism, so that the heat pump mechanism can be maintained in an appropriate state.

As described above, with state detection unit 45 detecting the temperature of coolant, regulating valve 27 and compression capacity varying unit 46 can be controlled to maintain the heat pump mechanism in an appropriate state.

### [Fourth embodiment]

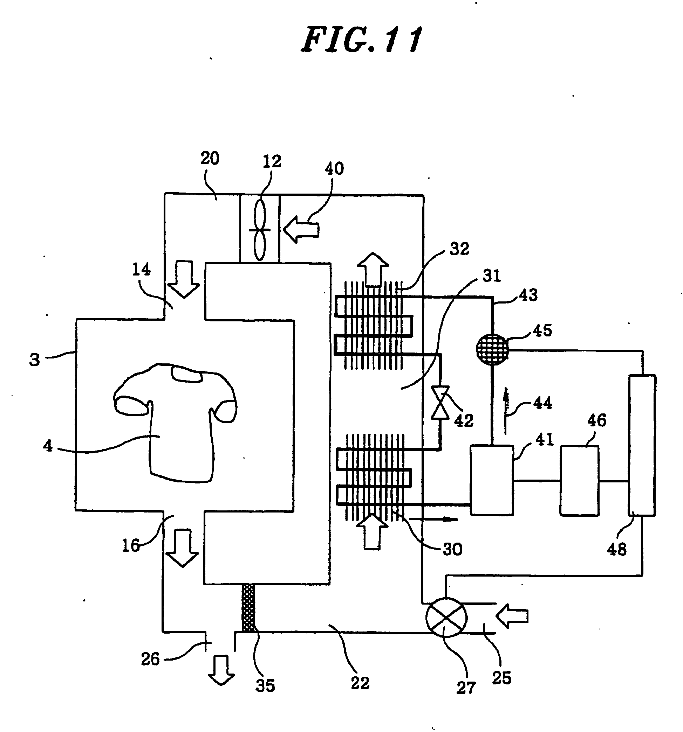

Fig. 11 is a schematic system diagram showing the construction of a heat pump mechanism and the flow of drying air in accordance with a fourth embodiment. The elements identical with those of the first and the second embodiment are designated by the same reference numerals, and detailed descriptions thereof are omitted.

The embodiment of Fig. 11 is characterized in that state detection unit 45 detects a pressure of coolant. In this embodiment, state detection unit 45 is installed in pipeline 43 extending from compressor 41 to heat radiator 32 to detect the pressure of coolant flowing in and along pipeline 43. Control unit 48 controls regulating valve 27 and compression capacity varying unit 46 so that the pressure of the coolant detected by state detection unit 45 falls within a predetermined pressure range. In this way, it is possible to control the amount of heat radiation from air discharge port 26 and compression capacity while monitoring the state of a heat pump mechanism, so that the heat pump mechanism can be maintained in an appropriate state.

As described above, with state detection unit 45 detecting the pressure of coolant, regulating valve 27 and compression capacity varying unit 46 can be controlled to maintain the heat pump mechanism in an appropriate state.

### [Fifth embodiment]

In a clothes dryer having a washing function in accordance with a fifth embodiment, coolant that works in a supercritical state, such as carbon dioxide, is used as coolant. Conventionally, in a heat pump mechanism where fluorocarbon-base coolant, such as R22 or R134a, is used and a high-pressure condition is set to be lower than critical pressure, condensation of the coolant occurs. As a result, in the region where the coolant undergoes heat exchange with air, there are many portions where the temperature of the coolant is maintained at the condensation temperature. Further, in heat exchange with the air, the temperature around the condensation temperature becomes the upper limit temperature, which is generally designed to be lower than a critical temperature by about 20°C to 30°C. The conventional coolant cited as an example above is generally used at a temperature below about 60°C to 65°C. Accordingly, the upper limit of the temperature of the drying air that has undergone heat exchange with the coolant while passing through heat radiator 32 becomes about 60°C to 65°C.

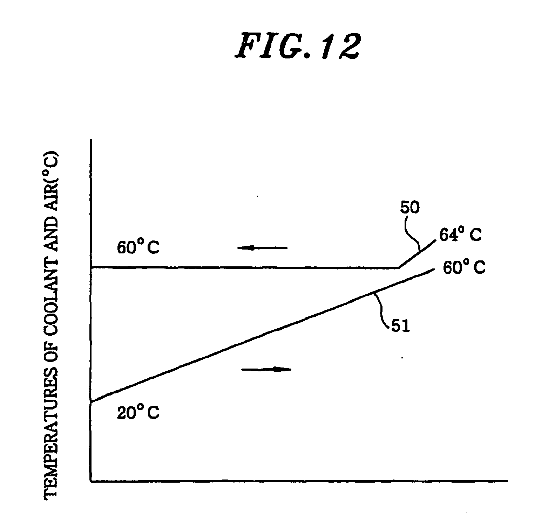

Fig. 12 is a graph illustrating variations in the temperatures 50 and 51 of coolant and air respectively when coolant is used at a temperature below the above critical temperature. The arrows in Fig. 12 represent temperature varying directions of the air and the coolant. For example, for coolant R134a, at a high pressure side of 1.68 MPa, condensation temperature becomes about 60°C. The temperature of the coolant immediately before flowing into heat radiator 32 is generally higher than this temperature. In heat radiator 32, the coolant is cooled because heat is radiated from the coolant to the air, and the state of the coolant enters a two-phase region where the phase of the coolant changes from gas to liquid, and is maintained at the condensation temperature of about 60°C.

During this process, condensation heat is radiated from the coolant and the drying air is heated thereby. The drying air has a temperature of, e.g., 20°C immediately before it flows through the heat radiator, and receives heat from the coolant to be heated to a higher temperature. When the coolant is in a gaseous state, it is at a temperature higher than 60°C. Since the transfer of heat requires a difference in temperature, the temperature of the drying air is increased up to about 60°C.

However, in the heat pump mechanism of a cycle using carbon dioxide as coolant that works in a supercritical state, heat exchange is possible at a temperature above the condensation temperature. Accordingly, it is possible to allow the temperature of drying air having passed through heat radiator 32 to be higher than 60°C.

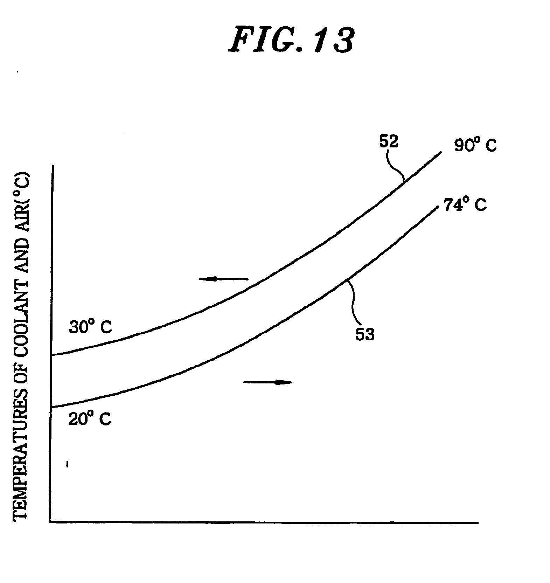

Fig. 13 is a graph illustrating variations in the temperatures 52 and 53 of coolant and air respectively when carbon dioxide is used as coolant in a supercritical state. For example, at a high pressure side of 11.5 MPa, the temperature of the coolant varies from about 90°C to about 30°C. During this process, heat is radiated from the coolant to heat the drying air. The drying air has a temperature of, e.g., 20°C immediately before it flows through the heat radiator, and receives heat from the coolant to be heated to a higher temperature. Since the temperature of the coolant is a high temperature of 90°C, the temperature of the drying air is increased up to about 74°C.

As described above, in case the cycle of the heat pump mechanism uses a coolant working in a supercritical state, it is possible to set the temperature of the coolant in heat radiator 32 to be higher, so that the temperature of the drying air supplied to outer tub 3 after having passed through heat radiator 32 can be higher. In general, for a constant amount of heat radiation, hotter drying air shortens drying time, thereby resulting in a smaller amount of total necessary energy. In this way, the reduction of drying time and the saving of energy can be achieved.

As described above, the clothes dryer of the present invention can stabilize the heat pump mechanism in a safe state and, simultaneously, can achieve the reduction of drying time and the saving of energy, so that the clothes dryer of the present invention can be usefully employed as a clothes dryer for drying clothes and a clothes dryer having a washing function.

While the invention has been shown and described with respect to the preferred embodiments, it will be understood by those skilled in the art that various changes and modifications may be made without departing from the scope of the invention as defined in the following claims.

## Claims

1. A clothes dryer comprising:
a drying chamber;
a heat pump mechanism including a compressor (41), a heat radiator (32) for radiating heat of compressed coolant, a throttle unit (42) for reducing pressure of the high-pressure coolant, and a heat absorber (30) for absorbing heat using the low-pressure coolant, the compressor (41), the heat radiator (32), the throttle unit (42) and the heat absorber (30) being connected by a pipeline (43) to allow the coolant to be circulated;
an air circulation path for circulating drying air from the drying chamber through the heat absorber (30) and the heat radiator (32) back to the drying chamber;
a blower (12) for blowing the drying air in the air circulation path;
an air introducing port (25) serving to introduce outside air into the air circulation path;
an air discharge port (26) serving to discharge a part of the drying air to the outside of the air circulation path; and
a filter (35) for filtering off lint contained in the drying air,
**characterized in that**
the drying chamber, the air introducing port (25), the filter (35), the air discharge port (26), the heat absorber (30) and the heat radiator (32) are sequentially disposed **in that** order in a direction in which the drying air is circulated.

2. The clothes dryer of claim 1, wherein at least one of the air introducing port (25) and the air discharge port (26) is provided with a regulating valve (27) for controlling an amount of air introduced and discharged.

3. The clothes dryer of claim 2, wherein the regulating valve (27) is set to control the amount of air introduced and discharged to be small in an early stage of a drying process.

4. The clothes dryer of claim 2, further comprising a state detection unit (45) for detecting a state of the heat pump mechanism;
wherein the regulating valve (27) is controlled in response to an output of the state detection unit (45).

5. The clothes dryer of claim 4, further comprising a compression capacity varying unit (46) for varying compression capacity of the compressor (41);
wherein the regulating valve (27) and the compression capacity varying unit (46) are controlled in response to an output of the state detection unit (45).

6. The clothes dryer of claim 5, wherein the compression capacity varying unit (46) sets the compression capacity of the compressor (41) to be high in an early stage of a drying process.

7. The clothes dryer of claim 4, wherein the state detection unit (45) detects a temperature of the air in the air circulation path.

8. The clothes dryer of claim 4, wherein the state detection unit (45) detects a temperature of the coolant.

9. The clothes dryer of claim 4, wherein the state detection unit (45) detects a pressure of the coolant.

10. The clothes dryer of claim 1, wherein the coolant works in a supercritical state.

11. The clothes dryer of claim 1, wherein the drying chamber is an outer tub (3) adapted to contain therein washing water, and an inner tub (5) is rotatably installed in the outer tub (3) so that the clothes dryer performs a washing process on clothes accommodated in the inner tub (5).

12. The clothes dryer of claim 1, further comprising a drain water container (36) for collecting condensed water from the heat absorber (30) to discharge the condensed water to outside of the clothes dryer.

## Patentansprüche

1. Wäschetrockner, umfassend:
eine Trockenkammer;
eine Wärmepumpeneinrichtung, die einen Kompressor (41), einen Wärmeabstrahler (32) zum Abstrahlen von Wärme eines komprimierten Kühlmittels, eine Drosseleinheit (42) zum Reduzieren des Drucks des unter Hochdruck stehenden Kühlmittels, und einen Wärmeabsorber (30) zum Absorbieren von Wärme unter Verwendung des unter niedrigem Druck stehenden Kühlmittels enthält, wobei der Kompressor (41), der Wärmeabstrahler (32), die Drosseleinheit (42) und der Wärmeabsorber (30) über eine Rohrleitung (43) verbunden sind, um ein Zirkulieren des Kühlmittels zu erlauben;
einen Luftzirkulationsweg zum Zirkulieren von Trocknungsluft von der Trocknungskammer durch den Wärmeabsorber (30) und den Wärmeabstrahler (32) zurück zur Trocknungskammer;
ein Gebläse (12) zum Blasen der Trocknungsluft in dem Luftzirkulationsweg;
einen Lufteinleitungsanschluss (25), der dazu dient, Außenluft in den Luftzirkulationsweg einzuleiten;
einen Luftabführungsanschluss (26), der dazu dienst, einen Teil der Trocknungsluft aus dem Luftzirkulationsweg nach außen abzuführen; und
einen Filter (35) zum Herausfiltern von Flusen, die in der Trocknungsluft enthalten sind,
**dadurch gekennzeichnet, dass**
die Trocknungskammer, der Lufteinleitungsanschluss (25), der Filter (35), der Luftabführungsanschluss (26), der Wärmeabsorber (30) und der Wärmeabstrahler (32) der Reihe nach in dieser Reihenfolge in einer Richtung, in der die Trocknungsluft zirkuliert, angeordnet sind.

2. Wäschetrockner nach Anspruch 1, wobei wenigstens der Lufteinleitungsanschluss (25) und/oder der Luftabführungsanschluss (26) mit einem Regelventil (27) zum Regeln einer eingeleiteten und abgeführten Luftmenge versehen ist.

3. Wäschetrockner nach Anspruch 2, wobei das Regelventil (27) dafür ausgelegt ist, die eingeleitete und abgeführte Luftmenge in einer frühen Phase eines Trocknungsprozesses klein einzustellen.

4. Wäschetrockner nach Anspruch 2, der ferner eine Zustandserfassungseinheit (45) zum Erfassen eines Zustands der Wärmepumpeneinrichtung umfasst;
wobei das Regelventil (27) in Reaktion auf eine Ausgabe der Zustandserfassungseinheit (45) gesteuert wird.

5. Wäschetrockner nach Anspruch 4, der ferner eine Kompressionsfähigkeit-Veränderungseinheit (46) zum verändern der Kompressionsfähigkeit des Kompressors (41) umfasst;
wobei das Regelventil (27) und die Kompressionsfähigkeit-Veränderungseinheit (46) in Reaktion auf eine Ausgabe der Zustandserfassungseinheit (45) gesteuert werden.

6. Wäschetrockner nach Anspruch 5, wobei die Kompressionsfähigkeit-Veränderungseinheit (46) die Kompressionsfähigkeit des Kompressors (41) in einer frühen Phase eines Trocknungsprozesses hoch einstellt.

7. Wäschetrockner nach Anspruch 4, wobei die Zustandserfassungseinheit (45) eine Temperatur der Luft in dem Luftzirkulationsweg erfasst.

8. Wäschetrockner nach Anspruch 4, wobei die Zustandserfassungseinheit (45) eine Temperatur des Kühlmittels erfasst.

9. Wäschetrockner nach Anspruch 4, wobei die Zustandserfassungseinheit (45) einen Druck des Kühlmittels erfasst.

10. Wäschetrockner nach Anspruch 1, wobei das Kühlmittel in einem überkritischen Zustand arbeitet.

11. Wäschetrockner nach Anspruch 1, wobei die Trocknungskammer eine Auβenwanne (3) ist, die dafür ausgelegt ist, darin Waschwasser zu halten, und wobei eine Innenwanne (5) drehbar in der Außenwanne (3) installiert ist, so dass der Wäschetrockner einen Waschvorgang mit in der Innenwanne (5) aufgenommener Wäsche durchführt.

12. Wäschetrockner nach Anspruch 1, der ferner einen Ablaufwasserbehälter (36) zum Sammeln von Kondenswasser vom Wärmeabsorber (30) umfasst, um das Kondenswasser nach aus dem Wäschetrockner nach außen abzuführen.

## Revendications

1. Sèche-linge comprenant :
un compartiment de séchage ;
un mécanisme de pompe à chaleur comportant un compresseur (41), un radiateur de chaleur (32) pour émettre de la chaleur de fluide de refroidissement comprimé, une unité d'étranglement (42) pour réduire la pression du fluide de refroidissement haute pression, et un absorbeur de chaleur (30) pour absorber la chaleur en utilisant le fluide de refroidissement basse pression, le compresseur (41), le radiateur de chaleur (32), l'unité d'étranglement (42) et l'absorbeur de chaleur (30) étant reliés par une conduite (43) afin de permettre la circulation du fluide de refroidissement ;
un chemin de circulation d'air pour faire circuler l'air de séchage du compartiment de séchage à travers l'absorbeur de chaleur (30) et le radiateur de chaleur (32) et le ramener à la chambre de séchage ;
un ventilateur pour souffler l'air de séchage dans le chemin de circulation d'air ;
un orifice d'introduction d'air (25) servant à introduire l'air extérieur dans le chemin de circulation d'air ;
un orifice d'évacuation d'air (26) servant à évacuer une partie de l'air de séchage à l'extérieur du chemin de circulation d'air ; et
un filtre (35) pour éliminer la poussière contenue dans l'air de séchage,
**caractérisé en ce que**
le compartiment de séchage, l'orifice d'introduction d'air (25), le filtre (35), l'orifice d'évacuation d'air (26), l'absorbeur de chaleur (30) et le radiateur de chaleur (32) sont disposés séquentiellement dans cet ordre dans une direction dans laquelle l'air de séchage est circulé.

2. Sèche-linge de la revendication 1, dans lequel au moins l'un de l'orifice d'introduction d'air (25) et de l'orifice d'évacuation d'air (26) est prévu avec une soupape de réglage (27) pour réguler une quantité d'air introduit ou évacué.

3. Sèche-linge de la revendication 2, dans lequel la soupape de réglage (27) est réglée pour réguler la quantité d'air introduit ou évacué pour qu'elle soit faible dans une étape initiale d'un processus de séchage.

4. Sèche-linge de la revendication 2, comprenant en outre une unité de détection d'état (45) pour détecter un état du mécanisme de pompe à chaleur ;
où la soupape de réglage (27) est commandée en réponse à une sortie de l'unité de détection d'état (45).

5. Sèche-linge de la revendication 4, comprenant en outre une unité de variation de capacité de compression (46) pour faire varier la capacité de compression du compresseur (41) ;
où la soupape de réglage (27) et l'unité de variation de capacité de compression (46) sont commandées en réponse à une sortie de l'unité de détection d'état (45).

6. Sèche-linge de la revendication 5, dans lequel l'unité de variation de capacité de compression (46) règle la capacité de compression du compresseur (41) pour qu'elle soit élevée dans un état initiale d'un processus de séchage.

7. Sèche-linge de la revendication 4, dans lequel l'unité de détection d'état (45) détecte une température de l'air dans le chemin de circulation d'air.

8. Sèche-linge de la revendication 4, dans lequel l'unité de détection d'état (45) détecte une température du fluide de refroidissement.

9. Sèche-linge de la revendication 4, dans lequel l'unité de détection d'état (45) détecte une pression du fluide de refroidissement.

10. Sèche-linge de la revendication 1, dans lequel le fluide de refroidissement travaille dans un état surcritique.

11. Sèche-linge de la revendication 1, dans lequel le compartiment de séchage est un bac externe (3) adapté pour contenir l'eau de lavage dedans, et un bac interne (5) est installé rotatif dans le bac externe (3) de sorte que le sèche-linge exécute un processus de lavage sur des vêtements contenus dans le bac interne (5).

12. Sèche-linge de la revendication 1, comprenant en outre un conteneur d'eau de drainage (36) pour collecter l'eau condensée de l'absorbeur de chaleur (30) pour évacuer l'eau condensée à l'extérieur du sèche-linge.
